# EUROPÄISCHE PATENTANMELDUNG

(11) **EP 3 466 590 A1**
(43) Veröffentlichungstag der Anmeldung: **10.04.2019**
(21) Anmeldenummer: 17195388.8
(22) Anmeldetag: 09.10.2017
(51) Int. Cl.: B23K 9/20, B23K 35/02

(54) **BEFESTIGUNGSVERFAHREN**

(71) Anmelder: HILTI Aktiengesellschaft, 9494 Schaan (LI)
(72) Erfinder: Popp, Uwe, 9443 Widnau (CH); Stahel, Simon, 7000 Chur (CH); Rosenbaum, Ulrich, 7323 Wangs (CH)
(74) Vertreter: Hilti Aktiengesellschaft Corporate Intellectual Property

(57) **Zusammenfassung**

Verfahren zum Befestigen eines Bolzens an einem Untergrund, bei dem der Bolzen an einem Umfang ein Anbindungsmittel (210) mit einer Querschnittsfläche und an einer Stirnseite (720) eine Stirnfläche (730) aufweist, wobei die Stirnfläche (730) kleiner als die Querschnittsfläche ist.

## Beschreibung

### Technisches Gebiet

Die Erfindung betrifft allgemein eine Vorrichtung und ein Verfahren zur Befestigung eines Bolzens an einem Untergrund sowie einen derartigen Bolzen.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Diese Aufgabe ist bei einem Verfahren zum Befestigen eines Bolzens an einem Untergrund, bei dem ein Bolzen zur Verfügung gestellt wird, welcher an einem Umfang ein Anbindungsmittel mit einer Querschnittsfläche und an einer Stirnseite eine Stirnfläche aufweist, die Stirnseite und/oder der Untergrund verflüssigt und wieder erstarren gelassen wird, die Stirnseite mit dem Untergrund in der Ausnehmung während des Erstarrens kontaktiert wird, dadurch gelöst, dass die Stirnfläche kleiner als die Querschnittsfläche ist. Aufgrund der kleineren Stirnfläche ist das zu verflüssigende Volumen und damit auch die zur Verflüssigung erforderliche Energie reduziert. Dies reduziert den Energieaufwand und stabilisiert unter Umständen das Befestigungsverfahren. Bei reduziertem Energieaufwand ist unter Umständen die maximale auftretende Temperatur reduziert, so dass auch temperaturempfindliche Werkstoffe, wie beispielsweise dünne Untergründe, verwendbar sind.

Der Erfindung liegt dabei die Erkenntnis zugrunde, dass eine Schweissverbindung bei gleicher Querschnittsfläche höhere Lasten trägt als eine Schraub- oder sonstige mechanische Verbindung. Lasten, die von dem Anbindungsmittel auf den Schweissbolzen übertragen werden, können daher von einer Schweissverbindung getragen werden, deren Querschnittsfläche im Vergleich zu dem Anbindungsmittel kleiner ist.

Die Aufgabe ist ebenfalls gelöst bei einem Schweissbolzen zum Befestigen an einem Untergrund, welcher an einem Umfang ein Anbindungsmittel mit einer Querschnittsfläche und an einer Stirnseite eine Stirnfläche aufweist, wobei die Stirnfläche kleiner als die Querschnittsfläche ist.

Eine vorteilhafte Ausführungsform ist dadurch gekennzeichnet, dass die Querschnittsfläche und/oder die Stirnfläche kreisförmig ist.

Eine weitere vorteilhafte Ausführungsform ist dadurch gekennzeichnet, dass die Stirnfläche eben ist.

Eine weitere vorteilhafte Ausführungsform ist dadurch gekennzeichnet, dass die Stirnfläche ringförmig ist.

Eine weitere vorteilhafte Ausführungsform ist dadurch gekennzeichnet, dass der Bolzen an der Stirnseite eine Querschnittsfläche aufweist, welche von der Stirnfläche ausgehend zunimmt. Bevorzugt ist die Querschnittsfläche des Bolzens an der Stirnseite abgestuft. Ebenfalls bevorzugt nimmt die Querschnittsfläche des Bolzens an der Stirnseite stufenlos zu.

### Ausführungsbeispiele

Die Erfindung wird nachstehend anhand von Ausführungsbeispielen unter Bezugnahme auf die Zeichnungen näher erläutert. Es zeigen:

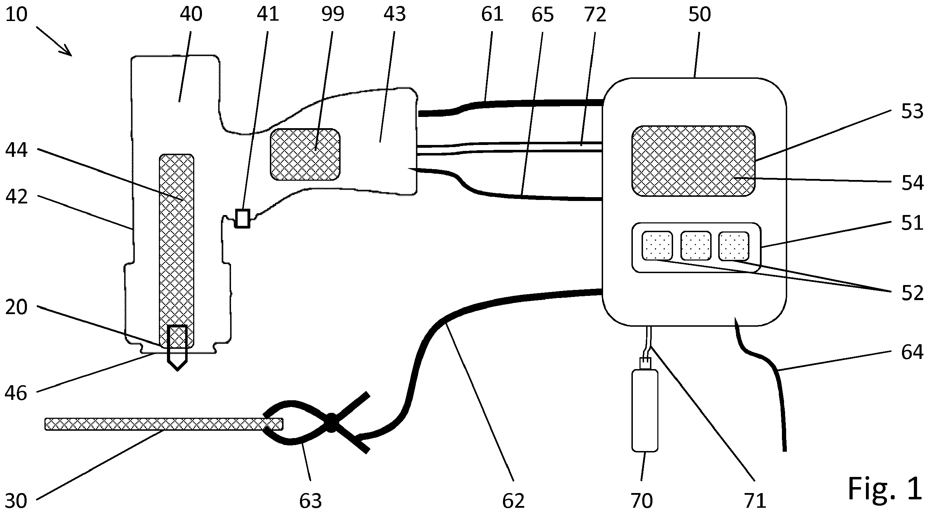

- Fig. 1: schematisch eine Schweissvorrichtung,
- Fig. 2:

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

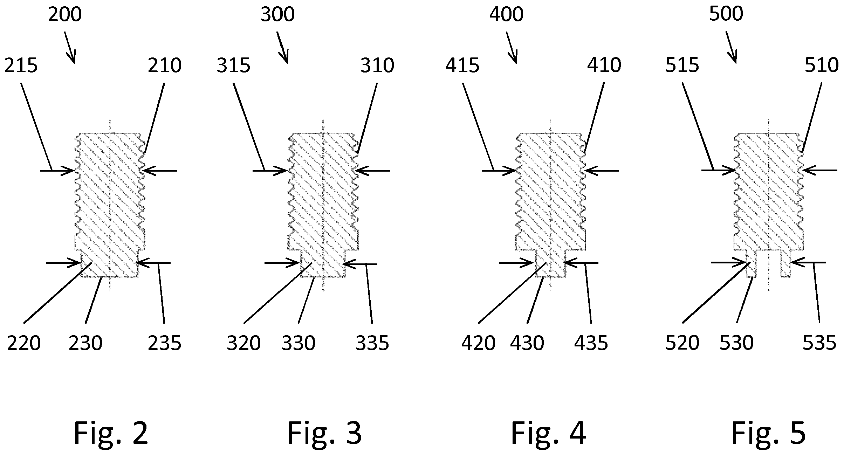

In Fig. 2 ist ein Schweissbolzen 200 zum Befestigen an einem Untergrund dargestellt. Der Schweissbolzen 200 weist an einem Umfang ein als Aussengewinde ausgebildetes Anbindungsmittel 210 mit einer kreisförmigen Querschnittsfläche und einem Gewindedurchmesser 215 auf. An einer von dem Anbindungsmittel 210 wegweisenden Stirnseite 220, die dafür vorgesehen ist, verflüssigt zu werden und wieder zu erstarren, um mit einem nicht gezeigten Untergrund verschweisst zu werden, weist der Schweissbolzen 200 eine kreisförmige, ebene Stirnfläche 230 auf. Die Stirnfläche 230 weist einen Schweissdurchmesser 235 auf, welcher 90% des Gewindedurchmessers 215 des Anbindungsmittels 210 beträgt, so dass die Stirnfläche 230 kleiner als die Querschnittsfläche des Anbindungsmittels 210 ist. Bei nicht gezeigten Ausführungsbeispielen beträgt der Schweissdurchmesser weniger als 90% des Gewindedurchmessers.

In Fig. 3 ist ein Schweissbolzen 300 zum Befestigen an einem Untergrund dargestellt. Der Schweissbolzen 300 weist an einem Umfang ein als Aussengewinde ausgebildetes Anbindungsmittel 310 mit einer kreisförmigen Querschnittsfläche und einem Gewindedurchmesser 315 auf. An einer von dem Anbindungsmittel 310 wegweisenden Stirnseite 320, die dafür vorgesehen ist, verflüssigt zu werden und wieder zu erstarren, um mit einem nicht gezeigten Untergrund verschweisst zu werden, weist der Schweissbolzen 300 eine kreisförmige, ebene Stirnfläche 330 auf. Die Stirnfläche 330 weist einen Schweissdurchmesser 335 auf, welcher 75% des Gewindedurchmessers 315 des Anbindungsmittels 310 beträgt, so dass die Stirnfläche 330 kleiner als die Querschnittsfläche des Anbindungsmittels 310 ist. Bei nicht gezeigten Ausführungsbeispielen beträgt der Schweissdurchmesser weniger als 75% des Gewindedurchmessers.

In Fig. 4 ist ein Schweissbolzen 400 zum Befestigen an einem Untergrund dargestellt. Der Schweissbolzen 400 weist an einem Umfang ein als Aussengewinde ausgebildetes Anbindungsmittel 410 mit einer kreisförmigen Querschnittsfläche und einem Gewindedurchmesser 415 auf. An einer von dem Anbindungsmittel 410 wegweisenden Stirnseite 420, die dafür vorgesehen ist, verflüssigt zu werden und wieder zu erstarren, um mit einem nicht gezeigten Untergrund verschweisst zu werden, weist der Schweissbolzen 400 eine kreisförmige, ebene Stirnfläche 430 auf. Die Stirnfläche 430 weist einen Schweissdurchmesser 435 auf, welcher 50% des Gewindedurchmessers 415 des Anbindungsmittels 410 beträgt, so dass die Stirnfläche 430 kleiner als die Querschnittsfläche des Anbindungsmittels 410 ist. Bei nicht gezeigten Ausführungsbeispielen beträgt der Schweissdurchmesser weniger als 50% des Gewindedurchmessers.

In Fig. 5 ist ein Schweissbolzen 500 zum Befestigen an einem Untergrund dargestellt. Der Schweissbolzen 500 weist an einem Umfang ein als Aussengewinde ausgebildetes Anbindungsmittel 510 mit einer kreisförmigen Querschnittsfläche und einem Gewindedurchmesser 515 auf. An einer von dem Anbindungsmittel 510 wegweisenden Stirnseite 520, die dafür vorgesehen ist, verflüssigt zu werden und wieder zu erstarren, um mit einem nicht gezeigten Untergrund verschweisst zu werden, weist der Schweissbolzen 500 eine kreisförmige, ebene Stirnfläche 530 auf. Die Stirnfläche 530 weist einen Schweissdurchmesser 535 auf, welcher 90% des Gewindedurchmessers 515 des Anbindungsmittels 510 oder weniger beträgt, so dass die Stirnfläche 530 kleiner als die Querschnittsfläche des Anbindungsmittels 510 ist. Die Stirnfläche 530 ist ringförmig ausgebildet, so dass die Schweissverbindung zwischen dem Schweissbolzen 500 und den Untergrund robuster gegenüber Biegelasten ist. Dadurch ist es möglich, die Schweissenergie zusätzlich zu reduzieren.

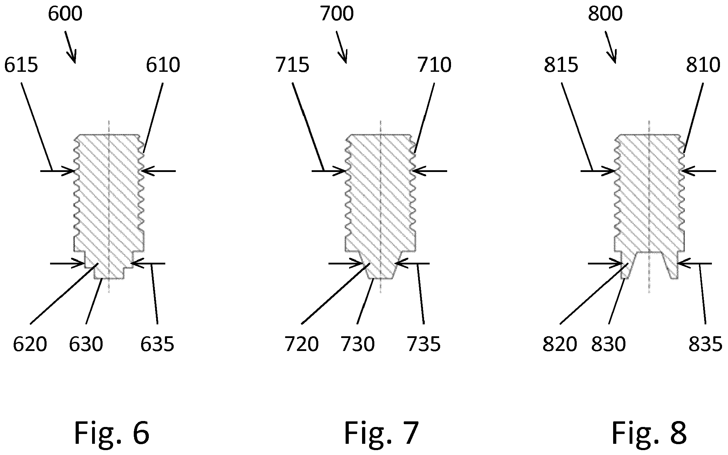

In Fig. 6 ist ein Schweissbolzen 600 zum Befestigen an einem Untergrund dargestellt. Der Schweissbolzen 600 weist an einem Umfang ein als Aussengewinde ausgebildetes Anbindungsmittel 610 mit einer kreisförmigen Querschnittsfläche und einem Gewindedurchmesser 615 auf. An einer von dem Anbindungsmittel 610 wegweisenden Stirnseite 620, die dafür vorgesehen ist, verflüssigt zu werden und wieder zu erstarren, um mit einem nicht gezeigten Untergrund verschweisst zu werden, weist der Schweissbolzen 600 eine kreisförmige, ebene Stirnfläche 630 auf. Die Stirnfläche 630 weist einen Schweissdurchmesser 635 auf, welcher, ausgehend von der Stirnfläche 630, von 50% des Gewindedurchmessers 615 des Anbindungsmittels 610 stufenförmig zunimmt. Dadurch ist einerseits die Stirnfläche 630 kleiner als die Querschnittsfläche des Anbindungsmittels 610 ist, andererseits ist der Durchmesser der späteren Schweissverbindung einstellbar, indem die Schweissenergie gesteuert wird. Der Betrag der Schweissenergie bestimmt nämlich die Menge und damit den Durchmesser desjenigen Materials des Schweissbolzens 600, das verflüssigt wird.

In Fig. 7 ist ein Schweissbolzen 700 zum Befestigen an einem Untergrund dargestellt. Der Schweissbolzen 700 weist an einem Umfang ein als Aussengewinde ausgebildetes Anbindungsmittel 710 mit einer kreisförmigen Querschnittsfläche und einem Gewindedurchmesser 715 auf. An einer von dem Anbindungsmittel 710 wegweisenden Stirnseite 720, die dafür vorgesehen ist, verflüssigt zu werden und wieder zu erstarren, um mit einem nicht gezeigten Untergrund verschweisst zu werden, weist der Schweissbolzen 700 eine kreisförmige, ebene Stirnfläche 730 auf. Die Stirnfläche 730 weist einen Schweissdurchmesser 735 auf, welcher, ausgehend von der Stirnfläche 730, von beispielsweise 50% des Gewindedurchmessers 715 des Anbindungsmittels 710 stufenlos zunimmt. Dadurch ist einerseits die Stirnfläche 730 kleiner als die Querschnittsfläche des Anbindungsmittels 710, andererseits ist der Durchmesser der späteren Schweissverbindung einstellbar, indem die Schweissenergie gesteuert wird.

In Fig. 8 ist ein Schweissbolzen 800 zum Befestigen an einem Untergrund dargestellt. Der Schweissbolzen 800 weist an einem Umfang ein als Aussengewinde ausgebildetes Anbindungsmittel 810 mit einer kreisförmigen Querschnittsfläche und einem Gewindedurchmesser 815 auf. An einer von dem Anbindungsmittel 810 wegweisenden Stirnseite 820, die dafür vorgesehen ist, verflüssigt zu werden und wieder zu erstarren, um mit einem nicht gezeigten Untergrund verschweisst zu werden, weist der Schweissbolzen 800 eine kreisförmige, ebene Stirnfläche 830 auf. Die Stirnfläche 830 weist einen Schweissdurchmesser 835 auf, welcher 90% des Gewindedurchmessers 815 des Anbindungsmittels 810 oder weniger beträgt, so dass die Stirnfläche 830 kleiner als die Querschnittsfläche des Anbindungsmittels 810 ist. Die Stirnfläche 830 ist ringförmig ausgebildet, so dass die Schweissverbindung zwischen dem Schweissbolzen 800 und den Untergrund robuster gegenüber Biegelasten ist. Die Stirnfläche 830 weist einen Flächeninhalt auf, welcher, ausgehend von der Stirnfläche 830, von beispielsweise 25% der Querschnittsfläche des Anbindungsmittels 810 stufenlos zunimmt. Dadurch ist der Durchmesser der späteren Schweissverbindung einstellbar, indem die Schweissenergie gesteuert wird.

Die Erfindung wurde anhand von Beispielen einer Vorrichtung zur Befestigung eines ersten Gegenstandes an einem zweiten Gegenstand sowie einem Herstellungsverfahren für eine solche Vorrichtung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass die erfindungsgemässe Vorrichtung und das erfindungsgemässe Verfahren auch für andere Zwecke geeignet sind.

## Patentansprüche

1. Verfahren zum Befestigen eines Bolzens an einem Untergrund, mit den Schritten
a) Zur-Verfügung-Stellen eines Bolzens, welcher an einem Umfang ein Anbindungsmittel mit einer Querschnittsfläche und an einer Stirnseite eine Stirnfläche aufweist,
b) Verflüssigen der Stirnseite und/oder des Untergrunds,
c) Erstarrenlassen der Stirnseite beziehungsweise des Untergrunds,
d) Kontaktieren der Stirnseite mit dem Untergrund in der Ausnehmung während des Erstarrens
wobei die Stirnfläche kleiner als die Querschnittsfläche ist.

2. Verfahren nach Anspruch 1, bei dem die Querschnittsfläche und/oder die Stirnfläche kreisförmig ist.

3. Verfahren nach einem der vorhergehenden Ansprüche, bei dem die Stirnfläche eben ist.

4. Verfahren nach einem der vorhergehenden Ansprüche, bei dem die Stirnfläche ringförmig ist.

5. Verfahren nach einem der vorhergehenden Ansprüche, bei dem der Bolzen an der Stirnseite eine Querschnittsfläche aufweist, welche von der Stirnfläche ausgehend zunimmt.

6. Verfahren nach Anspruch 5, bei dem die Querschnittsfläche des Bolzens an der Stirnseite abgestuft ist.

7. Verfahren nach einem der Ansprüche 5 bis 6, bei dem die die Querschnittsfläche des Bolzens an der Stirnseite stufenlos zunimmt.

8. Schweissbolzen zum Befestigen an einem Untergrund, welcher an einem Umfang ein Anbindungsmittel mit einer Querschnittsfläche und an einer Stirnseite eine Stirnfläche aufweist, wobei die Stirnfläche kleiner als die Querschnittsfläche ist.

9. Schweissbolzen nach Anspruch 8, wobei die Querschnittsfläche und/oder die Stirnfläche kreisförmig ist.

10. Schweissbolzen nach einem der Ansprüche 8 bis 9, wobei die Stirnfläche eben ist.

11. Schweissbolzen nach einem der Ansprüche 8 bis 10, wobei die Stirnfläche ringförmig ist.

12. Schweissbolzen nach einem der Ansprüche 8 bis 11, bei dem der Bolzen an der Stirnseite eine Querschnittsfläche aufweist, welche von der Stirnfläche ausgehend zunimmt.

13. Schweissbolzen nach Anspruch 12, wobei die Querschnittsfläche des Bolzens an der Stirnseite abgestuft ist.

14. Schweissbolzen nach einem der Ansprüche 12 bis 13, wobei die die Querschnittsfläche des Bolzens an der Stirnseite stufenlos zunimmt.
